## Europäisches Patentamt

## European Patent Office

## Office européen des brevets

(19)

(11) Veröffentlichungsnummer: **0 105 860**
**B1**

(12) ## EUROPÄISCHE PATENTSCHRIFT

(45) Veröffentlichungstag der Patentschrift:
**30.03.88**

(51) Int. Cl.⁴: **E 21 C 1/00**, E 21 C 7/08,
F 16 L 27/08

(21) Anmeldenummer: **83890146.0**

(22) Anmeldetag: **06.09.83**

(54) **Drehdurchführung, insbesondere für drehende Werkzeuge.**

(30) Priorität: **09.09.82 AT 3368/82**

(43) Veröffentlichungstag der Anmeldung:
**18.04.84 Patentblatt 84/16**

(45) Bekanntmachung des Hinweises auf die Patenterteilung:
**30.03.88 Patentblatt 88/13**

(84) Benannte Vertragsstaaten:
**BE CH DE FR GB IT LI LU NL SE**

(56) Entgegenhaltungen:
**GB - A - 1 082 612**
**US - A - 3 057 646**
**US - A - 3 361 451**
**US - A - 3 434 742**
**US - A - 3 889 983**
**US - A - 4 296 952**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Bognar, Josef, Dipl.-Ing., Peter-Tunner-Strasse 20, A-8605 Kapfenberg (AT)**

(74) Vertreter: **Widtmann, Georg, Dr., Vereinigte Edelstahlwerke Aktiengesellschaft (VEW) Elisabethstrasse 12, A-1010 Wien (AT)**

## Beschreibung

Die Erfindung betrifft eine Drehdurchführung an rotierenden Bohrmeisseln für die Zufuhr eines unter Druck stehenden, flüssigen Mediums von einem feststehenden in einen drehenden Rohrteil, welcher ein mit einem Lagergehäuse lösbar verbundenes, feststehendes Zuführungs-Rohrendstück umfasst und aus einem drehbaren Abführungselement gebildet ist, wobei im Bereich des Stosses zwischen dem Zuführungs-Rohrendstück und dem Abführungs-Rohrendstück eine gepresste Dichteinrichtung angeordnet ist, gemäss dem Oberbegriff des Anspruches 1.

Für den Abbau von Gestein, Beton, Erzen u.dgl. besteht das Bestreben, die mechanische Arbeit des rotierenden Bohrmeissels durch einen direkt auf die Bohrstelle gerichteten Strahl eines, vorzugsweise durch den Bohrmeissel selbst zentral zugeführten, unter möglichst hohem Druck stehenden flüssigen Mediums, üblicherweise durch einen Hochdruck-Wasserstrahl, zu unterstützen.

Es muss somit der, das drehende Arbeitswerkzeug tragende, vom Strahlmedium durchflossene, im Betrieb rotierende Teil, der etwa der Bohrerstange und dem Bohrfutter eines üblichen Bohrwerkzeuges entspricht, mit dem mit der Zuleitung für das Strahlmedium versehenen, für dieses Medium ebenfalls durchgängigen feststehenden Teil des drehenden Werkzeuges verbunden werden, wobei ein Austritt des Mediums an der Verbindungsstelle der beiden Teile mittels einer Dichteinrichtung verhindert werden und die Dichteinrichtung darüber hinaus den Belastungen und dem Verschleiss infolge der Rotation möglichst lange standhalten soll.

Nach US-A-4 296 952 ist eine Drehverbindung für den Durchfluss eines Mediums einer Leitungsröhre durch eine einfache reibungsarme Lagerung zwischen stehenden und drehenden Teilen bekannt geworden. Der stationäre Ring ist als Plastik- oder Kohlering ausgebildet, der mit Hilfe einer Feder an den drehenden, aus Keramik oder Stahl bestehenden Dichtring angedrückt wird. Es ist also nur eine drehbare Durchflussleitung mit geringem Druck aufgezeigt, die keine oszillierenden und drehenden Rohrmeissel mit der Zufuhr von Kühl- und Schmierwasser unter hohem Druck aufzeigt.

Diese drehbare Rohrverbindung ist insbesondere, was die Aufrechterhaltung der Dichtigkeit über längere Zeit betrifft, nicht imstande, den insbesondere beim Bohrbetrieb infolge der hohen Drehzahl im Bereich von etwa 1000 bis 2000 min$^{-1}$ auftretenden Belastungen bei gleichzeitiger Einwirkung des unter hohem Druck etwa im Bereich von 200 bis 2000 bar stehenden Strahlmediums über längere Betriebsdauer standzuhalten.

Aufgabe der vorliegenden Erfindung ist daher die Schaffung einer Drehdurchführung, welche den beschriebenen Nachteil nicht aufweist und über eine Dicht-Einrichtung zwischen feststehenden und rotierenden Teilen verfügt, die sich durch zuverlässige Abdichtung bei gleichzeitig hoher Verschleissfestigkeit auszeichnet. Daneben soll die Konstruktion relativ einfachen Aufbau aufweisen, sodass auch ein nach längerer Standzeit notwendiges Auswechseln der Dichtung einfach, schnell und problemlos erfolgen kann.

Erfindungsgemäss wird das Ziel dadurch erreicht, dass die Dichteinrichtung aus einem Scheibenpaar besteht, wobei eine der Dichtscheiben aus Siliziumnitrid und/oder Siliziumborid oder einem, vorzugsweise gesinterten, Hartstoff, beispielsweise Titankarbid und/oder Titannitrid gebildet ist.

Die Scheiben können aber auch beide aus, bevorzugt ebenfalls unterschiedlichem, keramischem Material, insbesondere aus karbidischem, nitridischem, boridischem und/oder oxidischem Material gebildet sein.

Damit ist eine gute Werkstoffpaarung gegeben, die den harten Betriebsbedingungen, wie diese bei Bohrmeisseln auftreten, Stand halten.

Anhand der Zeichnungen sei die Erfindung erläutert. Es zeigen:

Fig. 1 einen Schnitt durch eine erfindungsgemäss ausgebildete Drehdurchführung eines Bohrwerkzeuges mit Dichtungsscheiben gleichen Durchmessers,

Fig. 2 einen Schnitt durch eine der in Fig. 1 gezeigten Drehdurchführung sehr ähnliche Durchführung, bei welcher die Dichtungsscheiben verschiedene Durchmesser aufweisen, und

Fig. 3 einen schematischen Schnitt durch eine erfindungsgemäss einsetzbare Dichtungseinrichtung mit drei Dichtungsscheiben.

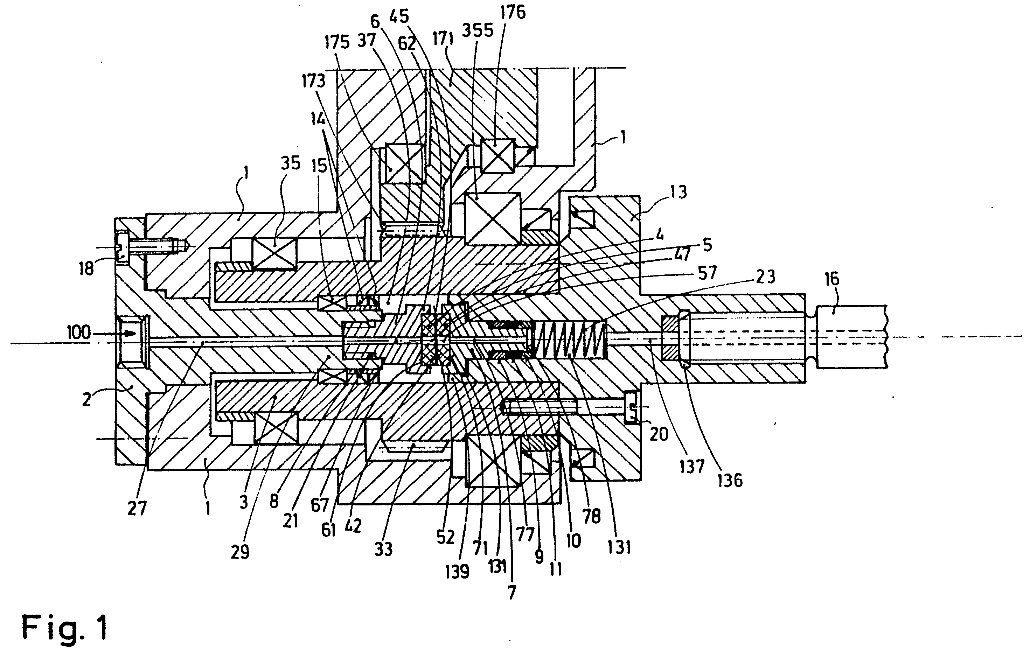

Bei der in der Fig. 1 gezeigten Drehdurchführung ist ein Gehäuse 1 vorgesehen, mit welchem mittels Befestigungselementen 18 das zur Zuführung eines, z.B. zur Unterstützung des Bohrvorganges dienenden, unter Druck von beispielsweise 2000 bar stehenden Mediums 100, feststehende, mit einem zentralen Durchgangskanal 27 für das Medium 100 ausgestattete Rohrendstück 2, lösbar verbunden ist. Zusammen bilden feststehendes Rohrendstück 2 und mit ihm verbundenes Gehäuse 1 das feststehende Zuführungselement der Drehdurchführung.

Das Rohrendstück weist an seiner Stirnseite 29 eine Ausnehmung 21 auf, in welche in der gezeigten Anordnung ein mehrstufig ausgebildeter, von einem zentralen Kanal 67 durchsetzter Dichtungs-Trägerkörper 6 eingeschraubt ist. Der Trägerkörper 6 besitzt seinerseits an seiner Stirnfläche 62 eine Ausnehmung 61, in welcher die ebenfalls eine zentrale Durchgangsöffnung 47 aufweisende, flachringförmige Dichtungsscheibe 4 eingesetzt ist.

Achsfluchtend mit dem feststehenden Rohrendstück 2 ist ein mittels Befestigungselementen 20 mit einem hohlen Führungszapfen 3 lösbar verbundenes, drehbares Rohrendstück 13 angeordnet. Die Lagerung dieses drehbaren Rohrendstückes 13 erfolgt über den auf den im feststehenden Gehäuse 1 abgestützten beiden Wälzlagern 35, 355 gelagerten, hohlen Führungszapfen 3, welcher sich über die Stirnseite 29 des feststehenden Rohrendstückes 2 erstreckt und dieses umgibt. Das drehende Rohrendstück 13 und der mit ihm verbundene Führungszapfen 3 bilden zusammen das Kernstück des drehbaren Abführungselementes der erfindungsgemässen Drehdurchführung.

Der Führungszapfen 3 ist in der gezeigten Ausführungsform an seiner Aussenseite mit einem Zahnkranz mit Zähnen 33 ausgestattet, welcher mit dem auf den Wälzlagern 175, 176 gelagerten Zahnrad mit Zähnen 173 eines nicht näher gezeigten, sich ebenfalls im Gehäuse 1 befindlichen Antriebes, im Eingriff steht. Mittels dieser kraftschlüssigen Verbindung wird das den Bohrmeissel 16 tragende, mit dem Führungszapfen 3 verbundene, drehbare Rohrendstück 13 in Rotation, z.B. mit 900 $min^{-1}$, versetzt. Das mit dem hohlen Führungszapfen 3 verbundene Rohrendstück 13 weist einen zentralen Durchgangskanal 137 für die Führung des flüssigen Mediums 100 auf, welcher sich gegen die dem feststehenden Rohrendstück 2 zugekehrte Stirnseite 139 des drehbaren Rohrendstückes 13 hin zu einer stufig ausgebildeten Ausnehmung 131 weitet, in welcher ein in seiner stirnseitigen Ausnehmung 71 eine mit Durchgangsöffnung 57 ausgestattete, flachringförmige Dichtungsscheibe 5 tragender, ebenfalls einen zentralen Durchgangskanal 77 aufweisender, stufenkolbenartiger Dichtungsträgerkörper 7 axial verschiebbar angeordnet ist.

Dieser axial verschiebbare Trägerkörper 7, welcher von einer mehrteiligen, die Abdichtung gegen die Innenwandung der Ausnehmung 131 gewährleistenden, Hochdruck-Dichtung 9, 10, 11 umgeben ist, wird von dem unter Betriebsdruck stehenden Medium 100 in der Ausnehmung 131 und zum geringen Teil von der dort untergebrachten Schraubenfeder 23 in Richtung zum gegenüberliegenden, am feststehenden Rohrendstück 2 angeordneten Trägerkörper 6 bzw. dessen Dichtungsscheibe 4 gedrückt und presst seinerseits die auf ihm selbst angeordnete Dichtungsscheibe 5 mit ihrer Stirnfläche 52 gegen die Stirnfläche 42 der Dichtungsscheibe 4.

Zwischen den beiden Stirnflächen 42 und 52 ist der Dichtungs- und Schmierfilm 45 angeordnet, der von dem unter Druck stehenden, infolge gezielter Leckage in geringer Menge zwischen die beiden Stirnflächen 42 und 52 eindringenden Medium 100 gebildet ist.

Das Ausmass dieser «gezielten Leckage» lässt sich durch Wahl der Dimension der aneinander schleifenden Flächenteile der beiden Dichtungsscheiben 4, 5 einstellen.

Die Grösse dieser Flächen steht im bestimmten Verhältnis zur Grösse jener Fläche 78 des stufenkolbenartig ausgebildeten Dichtungsträgerkörpers 7, auf welche das in der Ausnehmung 131 des drehbaren Rohrendstückes 13 sich befindende, unter Druck stehende Medium 100 einwirkt.

Wird beispielsweise das Ausmass der «Schleiffläche» zwischen den aneinander schleifenden Stirnflächen 42, 52 der Dichtungsscheiben 4, 5 vergrössert, dann wird auch die vom Medium über den Trägerkörper übertragene Kraft auf eine grössere Fläche verteilt, es sinkt dann der Anpressdruck zwischen den Stirnflächen 42, 52 und die «Leckage» wird angehoben, es tritt dann beispielsweise eine Dickenzunahme des Schmierfilmes 45 auf. Wenn geringe Mengen des den Schmierfilm 45 zwischen den Stirnflächen 42, 52 bildenden flüssigen Mediums an der Peripherie der Stirnflächen austreten, sammeln sie sich – praktisch nicht mehr unter Überdruck stehend – in dem nach aussen hin durch eine eine Art Wellendichtung bildende Dichtung mit Packung 14 und Ringkeil 8 abgedichteten Raum 37 innerhalb des Hohlraumes des Führungszapfens 3 an. An die Abdichtung 8, 14, welche an ein Rollenlager 15 grenzt, sind, da gegebenenfalls aus dem Film 45 austretendes Medium 100 infolge des innerhalb des Filmes auftretenden hohen Druckverlustes keinen Überdruck mehr besitzt, keine hohen Anforderungen zu stellen.

An der der Dichtungseinrichtung mit gezielter Leckage abgewandten Seite weist das drehbare Rohrendstück 13 eine Ausnehmung 136 auf, in welche der zur Durchführung des flüssigen Mediums innen hohle Bohrmeissel 16 eingesetzt ist. Es sei schliesslich erwähnt, dass ein typischer Wert für die Menge des durch die Drehdurchführung eines Gesteinsbohrwerkzeuges durchgeleiteten flüssigen Mediums beispielsweise 30 l Wasser pro min ist.

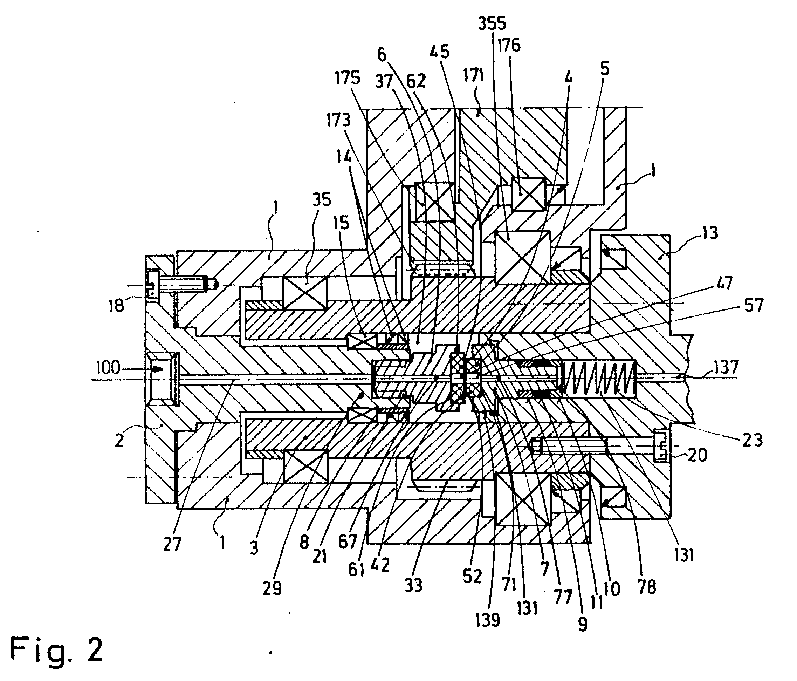

Bei der in Fig. 2 gezeigten, der in Fig. 1 dargestellten Drehdurchführung sehr ähnlichen Drehdurchführung sind gleiche Teile mit gleichen Bezugsziffern wie in Fig. 1 bezeichnet. Es ist dort eine andere Ausführungsform der Abdichtung zwischen feststehendem 2 und drehbarem Rohrendstück 13 gezeigt, bei welcher der Durchmesser der am drehbaren Rohrendstück 13 angeordneten Dichtungsscheibe 5 kleiner ist als jener der am feststehenden Rohrendstück angeordneten Dichtungsscheibe 4, wobei die Durchmesser der Durchgangskanäle 47, 57 gleich sind.

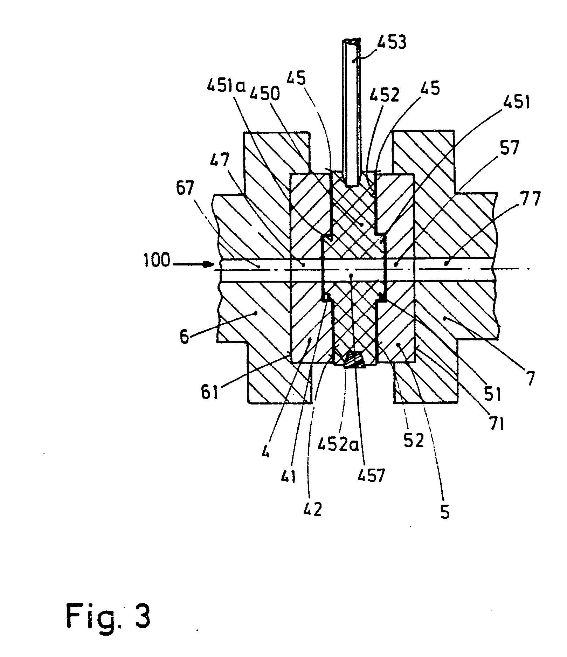

Fig. 3 zeigt eine erfindungsgemässe Drehdurchführung im Schnitt, bei welcher drei Dichtungsscheiben vorgesehen sind. In den in den Ausnehmungen 61 und 71 der Trägerkörper 6 und 7 sitzenden Dichtungsscheiben 4, 5 sind koaxiale, rotationssymmetrische Ausnehmungen 41, 51 angeordnet, in welchen achsstummelartige, rotationssymmetrische Vorsprünge 451, 451a an beiden Seiten der vom Durchführungskanal 457 für das Medium 100 durchsetzten Zwischen-Dichtungsscheibe 450 gelagert sind. Am Umfang der Scheibe 450, der beispielsweise Zähne trägt, greift ein Antriebsriemen 453, beispielsweise ein Zahnriemen, an, der – von einem nicht gezeigten Antrieb angetrieben – der Zwischen-Dichtungsscheibe eine Drehzahl erteilt, welche bevorzugt zwischen null und der Drehzahl der rotierenden Dichtungsscheibe 5 liegt; zwischen den beiden Aussenflächen 452, 452a der Zwischendichtungsscheibe 450 und den ihr zugekehrten Flächen 42 und 52 der Scheiben 4, 5 ist jeweils der durch das unter Druck stehende Medium 100 gebildete Dichtungs- und Schmierfilm 45 angeordnet.

Die sonstigen Bezugsziffern in Fig. 3 haben die gleiche Bedeutung wie in Fig. 1.

## Patentansprüche

1. Drehdurchführung für die Durchführung eines unter Druck stehenden, flüssigen Mediums (100) von einem feststehenden in einen drehbaren Werkzeug-Rohrteil, welche ein feststehendes Zuführungselement, das ein mit einem Lagerungs-Gehäuse (1) lösbar verbundenes, feststehendes Zuführungs-Rohrendstück (2) umfasst, und einem drehbaren Abführungselement gebildet ist, das ein an das Zuführungs-Rohrendstück (2) achsfluchtend und stumpfstossend anschliessendes Abführungs-Rohrendstück (13), welches mittels eines im Lagerhalterungs-Gehäuse (1) des Zuführungselementes angeordneten Lagers (35, 355), drehbar gelagert ist, umfasst, wobei im Bereich des Stosses zwischen dem Zuführungs-Rohrendstück (2) und dem Abführungs-Rohrendstück (13) eine axial gegen die Stirnseite (29, 139) eines der Rohrendstücke (2, 13) gepresste Dichteinrichtung angeordnet ist, die an den einander zugekehrten Stirnseiten (29, 139) des Zuführungs- (2) und des als Halterungselement für ein Werkzeug (16) ausgebildeten, Abführungs-Rohrendstückes (13), jeweils eine flachringförmige Dichtungsscheibe (4, 5) angeordnet ist, deren eine (5) mit ihrer Stirnfläche (52) mittels axial gerichteter Kraft unter Zwischenschaltung eines, von dem durch die zentralen Bohrungen bzw. Lumina (27, 137, 47, 57) der Rohrendstücke (2, 13) und der Dichtungsscheiben (4, 5) geführten, unter Druck stehenden, zwischen die beiden Stirnflächen (42, 52) der Dichtungsscheiben (4, 5) eindringenden flüssigen Mediums (100) gebildeten Schmierfilmes (45) gegen die Stirnfläche (42) der anderen Dichtungsscheibe (4) gepresst ist, wobei der Bereich der Stirnflächen (42, 52) der beiden Dichtungsscheiben (4, 5) selbst in einem drucklosen Raum (37) zur Aufnahme des den Schmierfilm (45) bildenden, gegebenenfalls an der Peripherie der Stirnflächen (42, 52) infolge von gezielter Leckage austretenden Mediums (100) angeordnet ist, die dadurch gekennzeichnet ist, dass eine der Dichtungsscheiben (4 oder 5) aus Siliziumnitrid und/oder Siliziumborid oder einem vorzugsweise gesinterten Hartstoff, beispielsweise Titankarbid und/oder Titannitrid, gebildet ist.

2. Drehdurchführung nach Anspruch 1, dadurch gekennzeichnet, dass die Dichtungsscheiben (4, 5) aus jeweils unterschiedlichem, keramischen Material, insbesondere aus karbidischem, nitridischem, boridischem und/oder oxidischem Material gebildet sind.

## Claims

1. A rotary duct for carrying a liquid medium (100) under pressure from a stationary tubular portion to a rotatable tubular portion of a tool, which rotary duct is formed of a stationary feed element, which comprises a stationary feed tube end piece (2) detachably connected to a bearing casing (1), and a rotatable discharge device, which comprises a discharge tube end piece (13) which adjoins the supply tube end piece (2) coaxially so as to abut the latter and which is rotatably mounted by means of a bearing (35, 355) disposed in the bearing support casing (1) of the supply element, a sealing device pressed axially against the end face (29, 139) of one of the tube end pieces (2, 13) being disposed in the region of the joint between the supply tube end piece (2) and the discharge tube end piece (13), the sealing device – respective a flat annular sealing disks (4, 5) – being disposed on the end faces (29, 139) which face one another of the supply tube end piece (2) and the discharge tube end piece (13), which is formed as a fixing element for a tool (16), one of the sealing disks (5) being pressed by its end face (52) against the end face (42) of the other sealing disk (4) by means of axially aligned force through the intermediary of a lubricating film (45) formed by a liquid medium (100), which is guided by the central bores or lumina (27, 137, 47, 57) of the tube end pieces (2, 13) and the sealing disks (4, 5), is under pressure, and penetrates between the two end faces (42, 52) of the sealing disks (4, 5), the region of the end faces (42, 52) of the two sealing disks (4, 5) itself being disposed in a pressureless chamber (37) for receiving the medium (100), which forms the lubricating film (45) and is optionally discharged at the periphery of the end faces (42, 52) as a result of intentional leakage, characterised in that one of the sealing disks (4 or 5) is formed of silicon nitride and/or silicon boride or a preferably sintered hard substance, for example titanium carbide and/or titanium nitride.

2. A rotary duct according to claim 1, characterised in that the sealing disks (4, 5) are formed of different ceramic material in each case, in particular of carbide, nitride, boride and/or oxide material.

## Revendications

1. Traversée rotative en vue de l'amenée d'un fluide sous pression (100) depuis une partie de tuyau d'outil stationnaire dans une partie de tuyau d'outil rotatif, qui comporte un élément d'amenée stationnaire, comprenant un tronçon terminal de tuyau d'amenée (2) stationnaire relié de façon amovible à un boîtier (1) et est formée d'un élément d'éduction rotatif, qui comporte un tronçon terminal de tuyau d'éduction (13) se raccordant coaxialement et bout à bout au tronçon terminal de tuyau d'amenée (2), qui est disposé à rotation au moyen d'un palier (35, 355) placé dans le boîtier (1) de l'élément d'amenée, à proximité du joint entre le tronçon terminal de tuyau d'amenée (2) et le tronçon terminal de tuyau d'éduction (13) étant disposé un dispositif d'étanchéité pressé contre le côté frontal (29, 139) d'un des tronçons terminaux de tuyau (2, 13), un disque d'étanchéité en forme d'anneau plat (4, 5) étant disposé sur les côtés frontaux tournés l'un vers l'autre (29, 139) du tronçon terminal de tuyau d'amenée (2) et du tronçon terminal de tuyau d'éduction (13) réalisé sous la forme d'un élément de support pour un outil (16), dont l'un (5) est pressé par sa surface frontale (52) au moyen d'une force dirigée axialement avec interposition d'un film de lubrification (45) formé par le fluide (100) pénétrant à travers les alésages ou lumières centraux (27, 137, 47, 57) des tronçons terminaux de tuyau (2, 13) et des disques d'étanchéité (4, 5), guidé sous pression entre les deux surfaces frontales (42, 52) des disques d'étanchéité (4, 5), contre la surface frontale (42) de l'autre disque d'étanchéité (4), la zone des surfaces frontales (42, 52) des deux disques d'étanchéité (4, 5) étant disposée elle-même dans un espace sans pression (37) en vue de la réception du fluide (100) s'échappant par suite d'une fuite intentionnelle formant le film de lubrification (45), éventuellement à la périphérie des surfaces frontales (42, 52), caractérisée en ce qu'un des disques d'étanchéité (4 ou 5) est réalisé en nitrure de silicium et/ou en borure de silicium ou en un matériau dur, de préférence fritté, par exemple du carbure de titane et/ou du nitrure de titane.

2. Traversée rotative selon la revendication 1, caractérisée en ce que les disques d'étanchéité (4, 5) sont formés à partir d'un matériau céramique différent, en particulier à partir d'un matériau carburé, nitruré, boruré et/ou oxydé.

Fig. 1

Fig. 2

0 105 860

Fig. 3